(19) Europäisches Patentamt
European Patent Office
Office européen des brevets

(11) **EP 2 858 292 A1**

(12) **EUROPEAN PATENT APPLICATION**

(43) Date of publication:
08.04.2015 Bulletin 2015/15

(51) Int Cl.:
*H04L 5/00* (2006.01)          *H04B 10/272* (2013.01)
*H04L 5/02* (2006.01)          *H04L 27/26* (2006.01)

(21) Application number: 13187413.3

(22) Date of filing: 04.10.2013

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: THALES NEDERLAND B.V.
7550 GD  Hengelo (NL)

(72) Inventors:
• De Heij, Wim
  7582 PZ LOSSER (NL)
• Pena Barros, Sara
  3810-388 AVEIRO (PT)

(74) Representative: Lucas, Laurent Jacques et al
Marks & Clerk France
Conseils en Propriété Industrielle
Immeuble Visium
22, Avenue Aristide Briand
94117 Arcueil Cedex (FR)

(54) **Method and system for OFDM data distribution**

(57)     The invention provides an OFDM data transmission system for distributing data in a distributed system comprising a set of nodes (21) connected to a network to exchange data. The OFDM data transmission system comprises:
- at least one OFDM transmitter (20) to generate an OFDM signal for data that are to be provided to the nodes, the OFDM signal comprising a number of carriers for transmitting data packets comprising OFDM symbols towards the nodes, and
- in each node (21), a respective OFDM receiver (216) for receiving an OFDM signal from the OFDM transmitter, each OFDM receiver being configured to receive a different subset of the carriers, and being centered at the frequency of the set of carriers.

FIGURE 2

EP 2 858 292 A1

**Description**

**FIELD OF THE INVENTION**

The invention generally relates to communication systems for data transport and in particular to an OFDM data transmission system for distributing data in a distributed system comprising a set of nodes connected to a network, such as a RF sensing system.

**BACKGROUND**

In RF (Radio Frequency) sensing systems (e.g. radar systems), the nodes are formed by distributed RF front-end modules that are connected to a communication network for the transport of massive amounts of data.

The design of the infrastructure around the RF front-end modules to transport RF signals, DC power, synchronization signals and data to/from the RF front-end modules is generally a complex task due to a number of constraints. In particular, electrical wiring and fibre optic cables for the transport of control data to the RF front-end modules add cost and weight to the system, and take space that may be scarce, especially for high RF (X-band and higher). Further, the multitude of interfaces to the RF front-end modules for DC-power, RF, clock/synchronisation signals and control data leads to design constraints and may complicate design optimization. In this case, the RF front-end modules are mounted behind the radiating face of the antenna in a very limited space, which is dictated by the wavelength that the antenna is built for as the space is more limited for shorter wavelengths presenting more design constraints for the infrastructure.

In addition, the infrastructure for the transport of the control data to the RF front-end modules is cumbersome. The data is specific for each RF front-end module, and has to be transmitted in a short time to all RF front-end modules simultaneously. For example, for a phased-array radar comprising 256 RF front-end modules and 1024 radiators, typical figures that have to be dealt with are :

- 10$\mu$s transmission time for 160 to 240 bits per RF front-end module;
- 256 RF front-end modules, each requiring one data link.

The total data rate is then 16 to 24 Mbit/s per data link, and in total 4.10 to 6.14 Gbit/s.

OFDM techniques can be used for data transport in such RF sensing systems. OFDM techniques are based on the use of a large number of orthogonal carriers, each modulated with an arbitrary modulation technique. If high order modulation techniques such as M-QAM (M$^{th}$ order Quadrature Amplitude Modulation) are used, OFDM can achieve high data rates within a given bandwidth.

For example, in a phased-array radar comprising 256 receivers and 1024 radiators, the OFDM bandwidth for 256 x 240 bits in 10$\mu$s, using 64-QAM which represents 6 bits per symbol, is :

240 bits = 40 symbols in 10$\mu$s, giving a symbol length $T_s$ of 0.25$\mu$s.

In OFDM, the frequency spacing $\Delta f$ between the carriers is 1/ $T_s$ = 4 MHz. As a result, the total bandwidth occupied by the OFDM signal will be 256 x 4 = 1024 MHz. This is about twice the bandwidth proposed in 'Multi-band OFDM Physical Layer Proposal for IEEE 802.15 Task Group 3a', referred to in [J. Bergervoet, H. Kundur, D.M.W. Leenaerts, R.C.H van de Beek, R. Roovers, G. van der Weide, H. Waite, S. Aggarwal, "A Fully Integrated 3-band OFDM UWB Transceiver in 0.25$\mu$m SiGe BiCMOS", Radio Frequency Integrated Circuits (RFIC) Symposium, 2006 IEEE , 11-13 June 2006] and an order of magnitude more than the bandwidth used in common WLAN applications [ANSI/IEEE Std 802.11, Wireless LAN Medium Access Control (MAC) and Physical Layer (PHY) Specifications].

Conventional OFDM techniques distribute the total amount of data over all the carriers, and employ receivers which process the entire transmitted bandwidth. A particular technique named OFDMA (Orthogonal Frequency Division Multiple Access) modulates the data for individual users (RF front-end modules in the example of a phased-array radar) on subsets of the carriers, which still requires receivers which process the entire transmitted spectrum [Morelli, M. et al., "Synchronization Techniques for Orthogonal Division Multiple Access (OFDMA): A tutorial review," in Proceedings of the IEEE, vol. 95 no.7, 2007, pp. 1394-1427].

Thus, using conventional OFDM techniques in a phased-array radar, each RF front-end module would have to be equipped with a receiver with high speed ADCs (Analogue-to-Digital Converters) and digital signal processing able to process a bandwidth of more than 1 GHz to recover just the 240 bits needed by the RF front-end module. This generates a significant complexity in RF front-end modules.

Conventional OFDM techniques accordingly do not provide an effective solution to the problem of massive data distribution.

## BRIEF SUMMARY OF THE INVENTION

In order to address these and other problems, there is provided an OFDM data transmission system as defined in the appended independent claim 1, and a method as defined in appended claim 17. Preferred embodiments are defined in the dependent claims.

According to the embodiments of the invention, the infrastructure for the transport of control data to the RF front-end modules is removed from the distributed system (e.g. RF sensing system) by using the existing RF combiner network as a communication network to transport the control data to the RF front-end modules and modulating the control data on a RF carrier with a suitable OFDM modulation technique for the total data rate.

The invention thus allows a fully parallel and simultaneous data transport to all RF front-end modules using the existing RF network. By using the existing RF network, the wiring and cabling infrastructure for the data transport can be simplified or removed from the system.

Further advantages of the present invention will become clear to the skilled person upon examination of the drawings and detailed description. It is intended that any additional advantages be incorporated herein.

## BRIEF DESCRIPTION OF THE DRAWINGS

Embodiments of the present invention will now be described by way of example with reference to the accompanying drawings in which like references denote similar elements, and in which:

FIGURE 1A is a functional diagram representing an example of a conventional phased array radar architecture;

FIGURE 1B shows the block diagram of a RF front-end module of the Phased array radar architecture represented in figure 1A;

FIGURE 1C shows a conventional architecture of the T/R (Transmit/Receive) channel that is part of the RF front-end module of figure 1B;

FIGURE 2 is a functional diagram representing of the architecture of a phased array radar architecture, according to certain embodiment of the present invention

FIGURE 3 is a block diagram of a RF front-end module, according to certain embodiments of the invention implemented.

FIGURE 4 is a block diagram of an OFDM transmitter, according to certain embodiments of the present invention;

FIGURE 5 is a block diagram of an OFDM receiver, according to certain embodiments of the present invention; and

FIGURE 6 shows a flowchart for distributing data in a RF network, according to certain embodiments of the present invention.

## DETAILED DESCRIPTION

According to the various embodiments of the invention, there is provided an OFDM communication system (also referred to thereinafter as "OFDM data transmission system") for data transport within a distributed system comprising nodes connected to a network, where data is sent from one node to other nodes in the network.

The nodes can be components within one system, or even sub-systems operating in a networked architecture at different locations.

The distributed system may be for example an RF (Radio Frequency) sensing system where the nodes are RF front-end modules to which data is distributed, such as a phased array radar system.

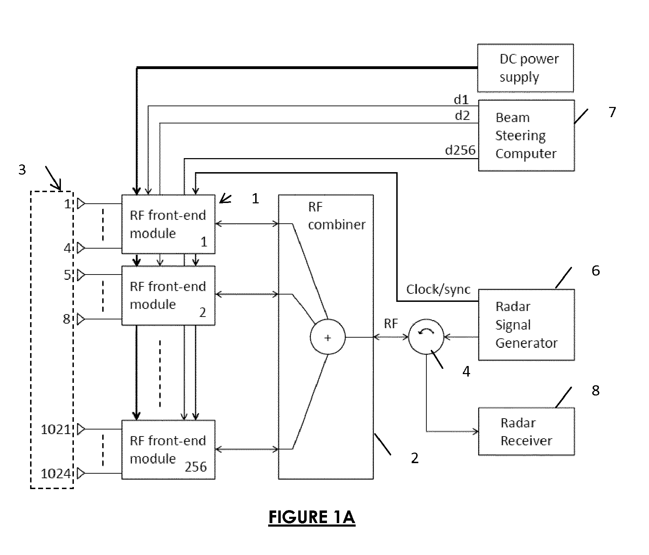

Figure 1A shows the general architecture of a conventional phased array radar. The phased array radar comprises active Transmit/Receive channels contained in RF front-end modules 1 and electronic beamsteering. The phased array antenna also comprises radiators 3 which are arranged in a linear or a planar configuration.

In the example of FIGURE 1A, the number of radiators 3 is 1024, the number of RF front-end modules 1 is 256 and the number of T/R (Transmit/Receive) channels in each RF front-end module is 4.

The RF front-end modules 1 containing the T/R-channels are mounted behind the antenna face. At one end, the T/R-channels are connected to the radiators 3 and at the other end they are connected to a RF combiner 2 with one common input/output port and as many individual input/output ports as RF front-end modules 1. The common port of the RF combiner is connected to a circulator 4, which provides the two signal paths for radar transmission and reception.

For radar transmission, the RF signal from the RSG 6 (Radar Signal Generator) is provided to the common port of the RF combiner 2. The RF combiner 2 distributes the RF signal from the common port to each individual port.

For radar reception, the RF signals from the T/R-channels are provided to the individual ports of the RF combiner 2. The RF combiner 2 sums the RF signals in phase, and the summed RF signal is provided to the radar receiver 8 via the circulator 4.

To steer the beam direction and create a specified beam shape, the beamsteering computer 7 computes the gain and phase settings required for each of the radiators. These control data, together with a clock/synchronisation signal and DC power have to be provided to the RF front-end modules 1. The clock/synchronisation signal is common for the RF front-end modules, while the control data is specific for each RF front-end module.

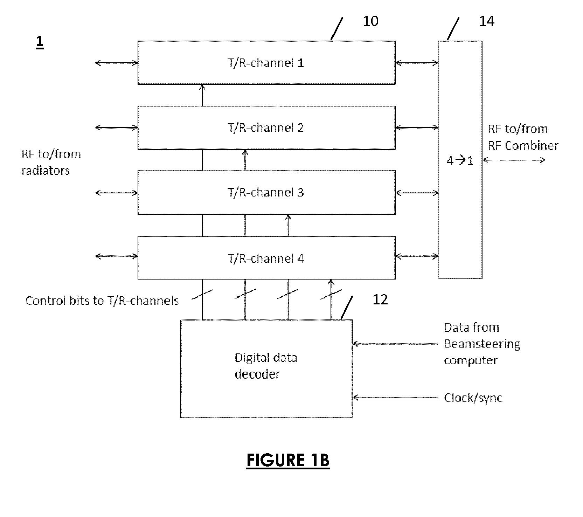

FIGURE 1B shows a block diagram of a conventional RF front-end module for use in a phased array radar. Each RF front-end module 1 comprises 4 T/R-channels 11 and a digital control block 12 (also referred to as digital data decoder) that receives the gain and phase settings for the T/R-channels and the clock/synchronisation signal. The controller 12 decodes the settings from the beam steering computer into the control bits for the components of the T/R-channel 10. Internally, the RF signals to/from the 4 T/R-channels 10 are distributed/summed by a 4-to-1 combiner 14 to obtain 1 RF input/output port towards the 256 port RF combiner 2.

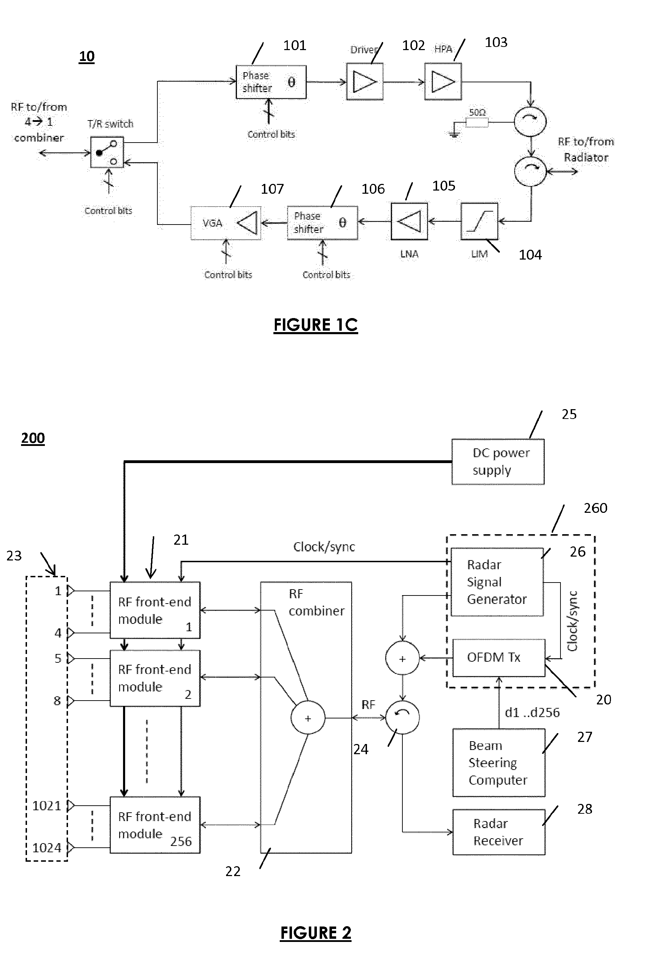

FIGURE 1C shows a block diagram of a conventional T/R-channel 10. For transmission, the upper path is active and is driven with the RF transmit signal from the RF combiner 2. The upper path consists of a phase shifter 101 for beam steering, a driver amplifier 102 and HPA 103 (High Power Amplifier) to amplify the RF transmit signal to the required power which is provided to the antenna element. For reception, the lower path is active and it receives the RF signal from the antenna element. The lower path consists of a limiter 104, a LNA 105 (Low Noise Amplifier), a phase shifter 106 and a VGA 107 (Variable Gain Amplifier) to amplify the received signal which is then provided to the RF combiner 114. The control bits for the phase shifters 101 and 106 and the VGA 107 give the gain and phase settings applied to the RF signal for each of the antenna elements, to obtain the desired beam direction and beam shape.

Such phased array radar may use OFDM techniques for data distribution. However, for conventional communication systems using wide-band OFDM with an instantaneous bandwidth of 500 MHz or more, several effects can complicate the correct retrieval of the transmitted data in the receiver as disclosed in J. Bergervoet, H. Kundur, D.M.W. Leenaerts, R.C.H van de Beek, R. Roovers, G. van der Weide, H. Waite, S. Aggarwal, "A Fully Integrated 3-band OFDM UWB Transceiver in 0.25μm SiGe BiCMOS", Radio Frequency Integrated Circuits (RFIC) Symposium, 2006 IEEE , 11-13 June 2006. In particular, phase delay variations across the OFDM band in analogue filters, and multipath effects and reflections in the transmission channel have to be corrected for in the receiver with equalization techniques in order to recover the constellations correctly. In existing approaches, the receivers are equipped with high speed ADCs and signal processing to perform these operations on the instantaneous bandwidth.

The invention overcomes the situation by providing an improved OFDM data transmission system for use in a distributed system comprising nodes interconnected through a network where data is exchanged between nodes.

Referring to figure 2, there is shown an overview of an OFDM data transmission system for data distribution within an exemplary distributed system 200, according to certain embodiments of the invention. In the example of figure 2, the distributed system is a RF sensing system of phased-array radar type with nodes 21 formed by RF front-end modules, for illustrative purpose. However, the skilled person will readily understand that the invention is not limited to phased-array radar systems and can apply similarly to a number of other distributed systems using OFDM for data distribution.

The OFDM data transmission system comprises at least one OFDM transmitter 20 and a plurality of OFDM receivers 216 built-in the RF front end modules 21, each being able to receive a small part of the spectrum. More specifically, each front end module 21 may comprise a respective OFDM receiver 216 (not shown in figure 2) which is in particular a narrow-band receiver. The number of receivers is then equal to the number of RF front-end modules 21 in the RF sensing system 200. For example, the RF sensing system can include from several tens to several thousands of OFDM receivers.

The OFDM transmitter 20 is configured to generate an OFDM signal for data that are to be provided to RF front-end modules 21. The OFDM signal comprises a number of carriers for transmitting data packets comprising OFDM symbols towards the RF front-end modules 21.

More specifically, the OFDM signal is transmitted in the form of data packets or messages, each comprising a number of consecutive OFDM symbols. Each OFDM symbol carries information bits or training data (also referred to as "known data" or "preamble") that are used for the demodulation.

Each OFDM symbol may be created by taking the Inverse Fast Fourier Transform (IFFT) of data symbols taken from a finite constellation such as M-QAM. Furthermore, each OFDM symbol may be preceded by a cyclic prefix or postfix (CP). Each data packet can also comprise a preamble comprising known OFDM symbols which can be used for phase correction.

The RF sensing system 200 also comprise conventional elements, as described with reference to figures 1A to 1C, including:

- A set of radiators 23 comprising in the represented example 1024 radiators,
- a RF combiner 22 with one input/output port and as many input/output ports as RF front-end modules 21;
- A circulator 24 connected to the common port of the RF combiner for providing the two signal paths for radar transmission and reception;
- A RSG 26 (Radar Signal Generator) connected to the common port of the RF combiner 22 for distributing the RF signal from the common port to each individual port;
- A radar receiver 28 adapted to receive the summed RF signal from the combiner 22 via the circulator 24;
- A clock signal common to the RF front-end modules 21;
- A DC supply 25 to provide DC power to the RF front-end modules 21;
- A beamsteering computer 27 to compute control data specific to each front-end module including the gain and phase settings required for each of the radiators 23 ; it is configured to provide the control data, together with the clock/synchronisation signal and the DC power to the RF front-end modules 21.

According to certain aspects of the invention, the gain and phase data for all RF front-end modules 21 is provided to the OFDM transmitter 20, where the data for each RF front-end module 21 is modulated on one or a few predefined carriers of the OFDM signal. The OFDM Transmitter 20 may be located in the RSG block 260 together with the RSG 26, where the data RF signal is added to the radar RF signal path, for distribution to the RF front-end modules 21 via the RF combiner 22.

The data RF signal is separated in frequency from the radar RF signals that are transported on the RF combiner 22 to prevent interference. The conventional wiring for the transport of the control data to the RF front-end modules 21 is removed from the system. The distribution of the clock/synchronisation signal may be used to support time synchronisation.

According to one aspect of the invention, the OFDM transmitter 20 and the set of OFDM receivers 216 are configured such that:

- At the transmit side (260), the binary data stream for each front-end module is divided into bit-words that can be mapped on a chosen constellation. The constellation points modulate one or a few carriers, which are allocated to that front-end module in an arbitrary, but predefined way; and
- At the receive side (21), each RF front-end module employs an OFDM receiver 216 with a narrow band filter which receives and processes only a small part of the entire OFDM bandwidth, comprising a sub-set of the carriers of the entire OFDM bandwidth.

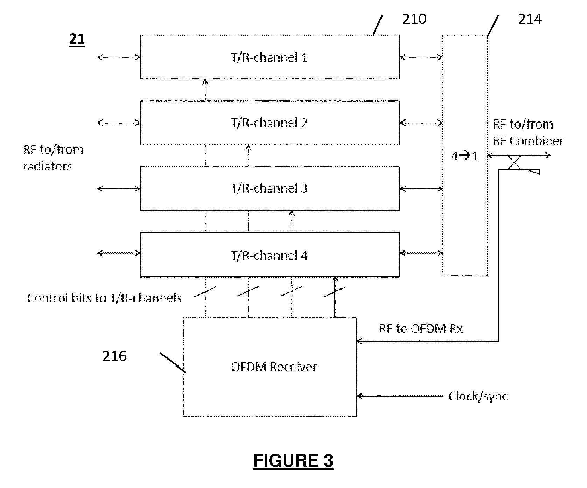

Figure 3 is a more detailed view of a front-end module 21 according to certain embodiments of the invention.

In each RF front-end module 21, an OFDM Receiver 216 is built-in to receive the OFDM signal. The OFDM signal may be received from the individual input/output port of the combiner 22 using a directional coupler, in the example of a RF sensing system of the type phased-array radar. Each OFDM Receiver 216 can be centered at a different frequency by using the tunable Local Oscillator 2162 and thus be tuned to a different sub-set of carriers of the OFDM spectrum. Each receiver 216 only demodulates the sub-set of carriers that is assigned to the corresponding RF front-end module 21. The demodulation may be performed using a narrow band filter and low speed ADCs (Analogue-To-Digital Converters).

Each OFDM Receiver 216 provides the demodulated control data to the T/R-channels 210.

The OFDM data transmission system according to the embodiments of the invention is further configured to deal with the fact that the receiver only processes part of the spectrum, by applying time synchronization and phase correction techniques.

In particular, the clock/synchronization signal common to the RF front-end modules 21 may be used to support the time synchronization of the OFDM Receiver 216.

In one embodiment of the invention, the synchronization may be performed by using of a clock signal with encoded syncs that is already available for the synchronization of Transmit/Receive switching in the T/R-channels 210. The syncs may be encoded in the clock by means of pulse width modulation. This enables a single time synchronization of the OFDM receivers 216 at system startup.

The RF combiner 22 provides a stable transmission medium, helping to maintain synchronization after system startup.

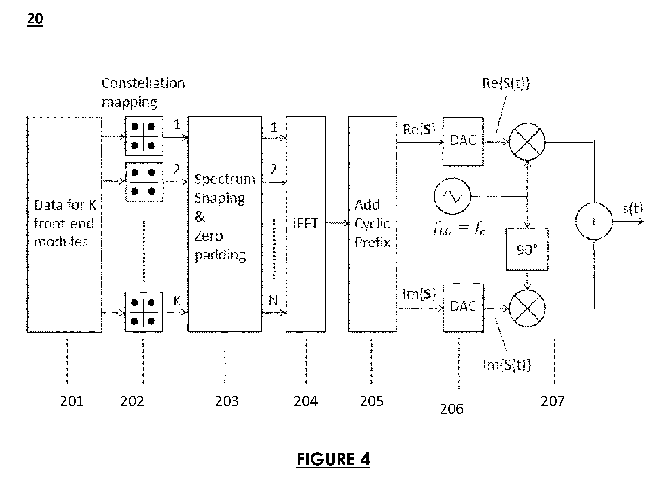

Figure 4 is a block diagram of the OFDM transmitter 20 (OFDM Tx) according to certain embodiments of invention.

The OFDM transmitter 20 is arranged as a circuit for generating an OFDM signal S for data which has to be provided to the RF front-end modules 21.

The data for the RF front-end modules 21 can be modulated using a suitable arbitrary modulation technique on the individual carriers so as to create an RF data signal that can be distributed to the RF front-end modules 21 using the RF distribution network that exists as part of the system functionality. The RF data signal is previously separated in frequency from the other RF signals that are transported on the RF network, to prevent interference.

More specifically, the data 201 for the RF front-end modules at the receive side may be mapped on constellations 202, which can be done in one step for all constellation points.

Constellations are representations of the transmitted data in the form of complex values (constellation points). These complex values are modulated on the K carriers in the transmitter 20 and demodulated in each receiver 216 using a suitable modulation technique. For instance, binary data words with length $\log_2(M)$ can be mapped on the points of an M-QAM constellation.

The following description will be made with reference to a number of carriers comprising one carrier per RF front-end module at the receive side.

The constellation points for each of the K RF front-end modules modulate sequentially one or a few carriers. The OFDM signal may be generated using a number of techniques to generate the modulated carriers, including spectrum shaping and zero padding 203 to control and shape the spectrum before transmission, and an IFFT (Inverse Fast Fourier Transform) 204. Further, a CP 205 can be added to each OFDM symbol to deal with the channel impulse response. Two Digital-to-Analog Converters (DACs) 206 may be additionally used to convert the digital OFDM signal S to an analog OFDM signal $S(t)$ at baseband, which may be then up-converted to RF using a vector modulator 207.

The Add Cyclic Prefix function 205 can be configured to add a cyclic prefix to an OFDM symbol. The length of the cyclic prefix of the OFDM symbol to be added may be determined from the length of the channel impulse response and the reflections of the RF network during the design.

Each data packet or message can begin with a preamble for phase correction which is configured in such a way that amplitude peaks in the OFDM signal are prevented. The phase correction may be used to compensate for phase drift in Local Oscillators used in the OFDM receivers 216, possible distortions on the transmitter side and residual synchronization errors.

The OFDM signal S thus generated depends on the modulated data $X$, on the number of elements ($N_{IFFT}$) on the IFFT 204 (IFFT is the acronym for "Inverse Fast Fourier Transform"), and on the index of the carriers k.

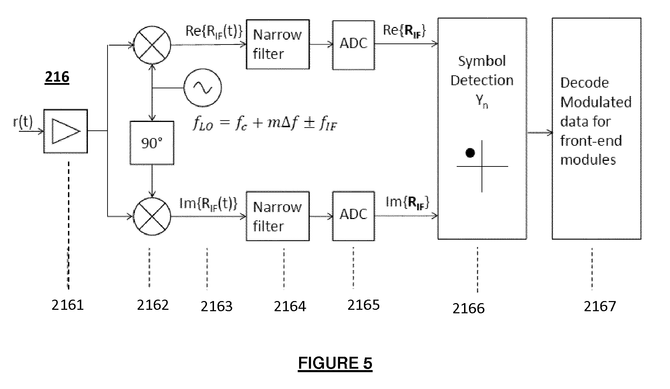

Figure 5 is a block diagram of an OFDM receiver 216 built in a RF front-end module 21 to receive the OFDM signal, according to certain embodiments of the invention.

Each OFDM receiver 216 may comprise of a Low Noise Amplifier (LNA) 2161, followed by a quadrature mixer 2162, which down-converts the received signal $r(t)$ to the complex IF signal $R_{IF}(t)$ using the tunable Local Oscillator (LO) 2163. More specifically, the Local Oscillator 2163 of each OFDM receiver 216 can be locked to the clock signal to maintain synchronization and to tune the carrier that transmits the desired data to a defined position within the bandwidth of a receiver narrow band filter (IF) as a first step of the demodulation. Each output of the quadrature mixer 2162 can be indeed connected to a respective narrow band filter 2164 which passes through the set of carriers of interest, and a respective low speed ADC 2165. The I&Q signal is thus filtered by the two narrow band filters 2164 and sampled by the two low speed ADCs (Analog To Digital Converter) 2165.

The second step of the demodulation can be performed digitally by a symbol detection function 2166 and a modulated data decoder 2167. More specifically, from the sampled IF signal $R_{IF}$, the constellation points can be retrieved sequentially by the symbol detection function 2166 and then the data can be decoded in step 2167.

Unlike conventional OFDM(A) systems that retrieve and process the entire spectrum, each of the OFDM receivers 216 according to the embodiments of the invention are configured to filter and process just the set of carriers of interest by using the narrow band filters 2164 and tuning the Local Oscillator 2162 to the frequency of that set of interest. This enables the use of low speed ADCs 2165, thereby resulting in a successful retrieval of data with just a few samples per OFDM symbol. Thus, no high speed signal processing hardware is required in the OFDM receiver 216. At the input of the receiver 216 a band-pass filter may be used to reject signals outside the OFDM bandwidth.

Accordingly, instead of processing the entire spectrum in the OFDM receiver, a narrow band filter 2164 can be used to filter just a small part of the spectrum comprising the set of carriers of interest for the RF front-end module. To transport the OFDM signal, the RF network is used, providing a wired medium which prevents EMI problems with the RF front-end modules 21. Furthermore, by sharing the existing RF network in the system 200, the wiring and cabling infrastructure for the data transport can be simplified or removed. This creates space that relieves design constraints on the transport of DC power, RF and clock/synchronisation signals.

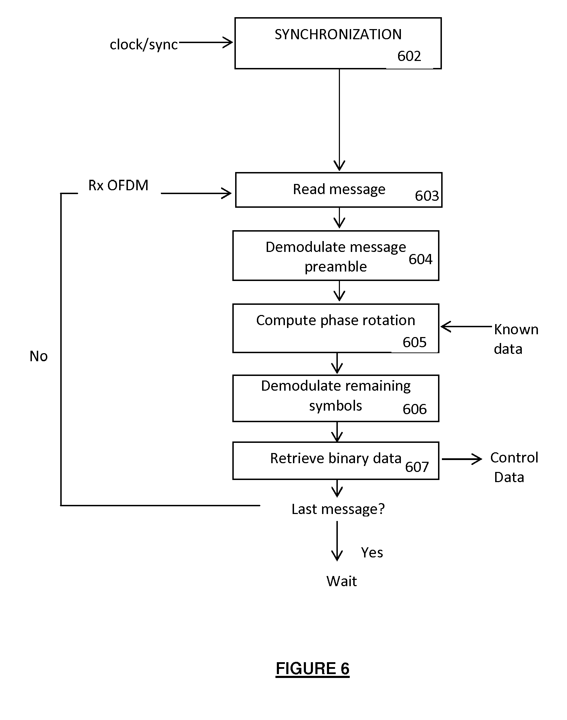

Figure 6 illustrates the method for OFDM data distribution in a RF sensing system, according to certain embodiments of the invention.

At system start-up, the synchronization is performed in step 602 with suitable synchronization techniques to synchronize in time the receivers 216 one by one, or alternatively to synchronize them simultaneously.

Following the synchronization of the RF front-end modules 21, the OFDM transmitter 20 can start sending data in the form of data messages in step 603. Each data message comprises a preamble for phase correction which may be a string of known symbols selected so that amplitude peaks in the OFDM signal are prevented. The phase correction may be used to compensate for phase drift in the Local Oscillator 2162 of the OFDM receivers 216, and/or possible distortions on the transmitter side and/or residual synchronisation errors. The data message can further comprise a number of arbitrary data symbols, following the preamble, that depend on the chosen modulation and/or the number of bits that have to be transmitted.

At the transmit side, the OFDM signal S is then generated from the output data of the beamsteering computer 17 by the OFDM transmitter 20, according to equation 1:

$$S = \frac{1}{N_{IFFT}} X e^{\frac{i2\pi kn}{N_{IFFT}}} \qquad \text{(Equation 1)}$$

In Equation 1:

$N_{IFFT}$ designates the number of elements on the IFFT,
$X$ designates the binary data mapped on constellation points (modulated data), which is a matrix of dimensions [$N_{IFFT}$ x number of symbols],
$k$ is a vector designating the carrier index with $k = [0,1,2,..N_{IFFT}-1]$
$n$ is a vector designating the time sample index with $n = [0,1,2,..N_{IFFT}-1]^T$
$S$ designates the time domain output of the IFFT for an entire message, which is a matrix of dimensions [$N_{IFFT}$ x number of symbols].

The total number of carriers $K$ that is generated depends on the number of RF front-end modules 21, and/or the required data rate and/or the choice of the modulation. In particular, if $K < N_{IFFT}$, zero padding will be applied at the IFFT input.

To control and shape the spectrum before transmission (203), several techniques may be applied. The length of the channel impulse response and reflections of the RF network may determine the length of the cyclic prefix of the OFDM symbol (205) to be added. At the DAC output (206), the signal is time-continuous and can be written as a complex signal $S(t)$. $Re\{S(t)\}$ and $Im\{S(t)\}$ represent the input signals for the vector modulator 207 which up-converts $S(t)$ from baseband to RF according to equation 2:

$$s(t) = S(t)e^{i2\pi f_c t} \qquad \text{(Equation 2)}$$

In Equation 2, $s(t)$ designates the actual transmitted signal and $f_c$ designates the frequency around which the OFDM spectrum is centered.

The signal $r(t)$ (shown in Figure 5) arrives at an OFDM receiver 216 through the RF network. The signal $r(t)$ is then down-converted to a complex signal $R_{IF}(t)$ with the local oscillator 2162, according to equation 3:

$$R_{IF}(t) = r(t)e^{-i2\pi f_{LO}t} \qquad \text{(Equation 3)}$$

$f_{LO}$ designates the Local Oscillator (LO) frequency according to Equation 4:

$$f_{LO} = f_c + m\Delta f \pm f_{IF}, \quad \text{with } m \in \mathbb{Z}_0 \qquad \text{(Equation 4)}$$

According to an aspect of the invention, the Local Oscillator 2162 of each OFDM receiver 216 is locked to the clock signal to maintain synchronisation and to tune the carrier that transmits the desired data to a defined position within the bandwidth of the receiver filter (IF) 2164, as a first step of the demodulation.

The $R_{IF}(t)$ signal is then sampled by the ADCs 2165, the sampled signal being represented by vector $R_{IF}$.

The second step of the demodulation is performed digitally. More specifically, for each message read in step 603, the preamble of the message is demodulated in step 604. The phase rotation is then determined in step 605 by comparing the demodulated symbols of the received preamble with the known symbols of the transmitted preamble. The phase rotation corresponds to the angle over which the received data symbols have to be rotated in the complex plane before the demodulation performed in step 606.

In step 606, the constellation of the carriers of interest is retrieved by performing the last part of the FFT, according to equation 5 :

$$Y = R_{IF} e^{\frac{-i2\pi kn}{N_{FFT}}} e^{-i\varphi} \qquad \text{(Equation 5)}$$

In Equation 5:

$N_{FFT}$ designates the number of elements on the FFT i.e the number of time domain samples after decimation,
$N_c$ designates the number of carriers in the set of interest with $1 \leq N_c \leq N_{FFT}$;
$R_{IF}$ designates the sampled IF signal, which is a matrix of dimension [$N_{FFT}$ x number of symbols];
$k$ designates the carrier index, which is a vector of dimensions [1 x $N_c$];
$n = [0,1,2,...N_{FFT}-1]^T$ is a vector designating the time sample index,
$Y$ designates the frequency domain output of the FFT, which is a matrix of dimensions [$N_c$ x number of symbols];
$\varphi$ designates the phase rotation needed for phase correction, which is a vector of dimensions [1 x $N_c$].

In certain embodiments of the invention, only the FFT output for the set of carriers of interest can be computed, i.e. only the frequency bins corresponding to the elements of $k$ are computed.

In step 607, the constellation points Y are decoded to obtain the original binary data. The OFDM receivers 216 may continue demodulating messages without the need to enter the synchronization loop again.

In a simple application of the described embodiments of the invention, K single carrier transmission channels can be created with a frequency spacing $\Delta f$, taking advantage of the orthogonality in frequency at the transmit side, to send data simultaneously to K single carrier receivers. In such application, first, the binary data stream for each of the K receivers is broken up into $N_w$ -bit-words that can be mapped on the chosen constellation. This results in K sets of $N_w$ constellation points. Second, the first constellation point of each of the K sets is put on the IFFT input. The IFFT is performed, resulting in the first time domain symbol of the data stream. The first time domain symbol contains the K carriers, modulated with the first constellation point that has to be sent to each of the K receivers. Subsequently, the same operation is performed for the remaining $N_w$-1 constellation points of each of the K sets.

As a result of this mode of operation at the transmit side, the OFDM system according to the invention modulates the single carrier that is assigned to one RF front-end module with its constellation points sequentially in time. This can then be done for all $K$ carriers, resulting in $N_w$ time domain symbols. In other words, the constellation is spread in time and transmitted on one carrier.

Each receiver 216 can use its narrow filters 2164 to demodulate only the single carrier that it is tuned to, by performing the FFT calculation only for the FFT frequency bin in which this carrier is centered. At the output of the single bin FFT the demodulated constellation points can then be retrieved sequentially for that RF-front end module. As a last step, the original bit-words are decoded according to the mapping used at the transmit side and the data stream is reconstructed.

This example can be extended to a case with more than one carrier per receiver 216, depending on the data rate that is required and/or the order of the modulation that is desired. The orthogonality between the carriers can be maintained, and the FFT calculation in the receiver can be extended to include more than one frequency bin. According to another aspect of the invention, the output power of the OFDM transmitter 20 may be chosen such that the signal at the input of each of the OFDM Receiver 216 has a sufficiently high Signal-to-Noise Ratio (SNR) to obtain a Symbol Error Rate (SER) which is low enough to have a negligible impact on the performance of the system.

For example, for a phase-array radar system, a bit-error rate can be obtained by allowing one T/R-channel 210 to be switched off due to detection of an error in its control data. This corresponds to 0.1% of the radiators 23 and the resulting disturbance of the antenna side-lobes is > 45dB below the main lobe.

In the described example of a phased-array radar system with 256 front-end modules 21, for 240 bits with 64-QAM modulation (6 bits per symbols), the message to an RF front-end module 21 comprises 40 symbols in 10$\mu$s, giving a symbol length $T_s$ of 0.25$\mu$s. The total number of symbols sent to the RF front-end modules is thus 256 x 40 = 10240.

Further considering that an average of one symbol error is allowed in each set of control data, this corresponds to a SER (Symbol Error Rate) of $10^{-4}$. The corresponding SNR at the output of each OFDM Receiver 216 accordingly depends on the chosen modulation, and/or on the exact implementation of the OFDM Receiver 216, and/or the cyclic prefix length. Values may range from 25dB to 29dB. Such values can be easily obtained even in the presence of the losses associated with the RF combiner 22 and the directional coupler.

The RF distribution network thus provides a stable transmission channel that has a known transfer function in the bandwidth occupied by the OFDM signal. Within this bandwidth, the set of carriers of interest can be assigned to a given receiver 216 in a predefined arbitrary way.

Although the invention has particular advantages for radar applications, it can be used in other sensing systems and more generally to other distributed or networked systems using OFDM or OFDMA techniques for data distribution, with either wired transmission through a RF network or wireless transmission, where data has to be sent from one node or system to other nodes or systems in the network. For example, it can be used within different types of distributed systems such as multi-sensor systems, with very different needs for data transport capacity, and with a number of sensors ranging from a few to several 100. The skilled person will readily understood that the way the data is structured within the OFDM spectrum makes the OFDM data transmission system adaptable to a wide range of applications.

The invention can be adapted to the specific area of application, in terms of the number of carriers, the number of carriers per receiver (this number can be different for each receiver), the used modulation per receiver depending on the needed data rate, and the transmitted power per carrier. Further, the solution allows for different time length messages to each receiver by just nulling the carriers of the RF front-end modules that already have all the information needed or that do not need information, without affecting the time domain symbol or degrading the performance of the system.

The proposed solution is flexible in that it can be used in one-to-multipoint applications, multipoint-to-one applications, and in general for RF sensing systems with distributed RF front-end modules that are connected to a network for transport of RF signals.

The OFDM data transmission system according to the described embodiments of the invention simplifies the problem of phase correction of conventional wideband OFDM by sending the constellation points sequentially over one or a few carriers. The global phase correction on the entire bandwidth is replaced by a much simpler local phase correction on a narrow bandwidth.

The invention thus provides a fully parallel and simultaneous data transport to all RF front-end modules.

The invention enables high speed data transmission at RF, coexisting with the other RF signals transported by the system on the same RF network.

Further, the use of the OFDM technique results in a very controllable RF spectrum of the data transport, compared to high speed digital data links used in the conventional solution. This enables the coexistence of the data transport with the other RF signals in the network.

In addition, the use of OFDM results in a data transmission that is very tolerant with regard to imperfections of the RF network. This allows the optimization of the RF network for the frequencies that are used in the essential function of the RF sensing system, while still being able to transport data at another frequency where the RF network is non-optimal.

The invention accordingly simplifies or completely removes the need for a data distribution layer in the system, thereby reducing the cost and weight of the infrastructure, creating space, alleviating design constraints, and allowing a more optimal design of the essential system functions.

It is another advantage of the invention to realize a large data transport capacity of one or more Gbits/s within a limited part of the frequency spectrum, with spectral side-lobes that are controllable with techniques known as part of the background art. This makes it a suitable data transport technique for use in an EMI (acronym for Electro Magnetic Interference) sensitive environment.

Although the embodiments of the present invention have been described in detail, it should be understood that various changes and substitutions can be made therein without departing from spirit and scope of the inventions as defined by the appended claims. Variations described for the present invention can be realized in any combination desirable for each particular application. Thus particular limitations, and/or embodiment enhancements described herein, which may have particular advantages to a particular application need not be used for all applications. Also, not all limitations need be implemented in methods, systems and/or apparatus including one or more concepts of the present invention.

Embodiments of the present invention can take the form of an embodiment containing both hardware and software elements.

**Claims**

1. An OFDM data transmission system for distributing data in a distributed system comprising a set of nodes (21) connected to a network to exchange data, wherein the OFDM data transmission system comprises:

- at least one OFDM transmitter (20) to generate an OFDM signal for data that are to be provided to said nodes, said OFDM signal comprising a number of carriers for transmitting data packets comprising OFDM symbols towards the nodes (21), and
- in each node (21), a respective OFDM receiver (216) for receiving an OFDM signal from said OFDM transmitter, each OFDM receiver being configured to receive a different subset of said carriers, and being centered at the frequency of said set of carriers.

**2.** The OFDM data transmission system of any preceding claim, wherein the OFDM transmitter (20) is configured to generate data that are to be transmitted to each node (21), and map said data to respective chosen constellation points, said constellation points modulating sequentially the set of carriers that are allocated to the node.

**3.** The OFDM data transmission system of claim 2, wherein said set of carriers are allocated to a node (21) in an arbitrary and predefined way.

**4.** The OFDM data transmission system of claim 3, wherein the modulation of said set of carriers is performed using an Inverse Fast Fourier Transform operation.

**5.** The OFDM data transmission system of claim 4, wherein the OFDM transmitter (20) is configured to apply a spectrum shaping and zero padding operation (203) prior to the IFFT (Inverse Fast Fourier Transform) operation to control and shape the spectrum of the signal before transmission.

**6.** The OFDM data transmission system of any preceding claim, wherein the OFDM transmitter (20) is configured to add a cyclic prefix to each OFDM symbol before transmission, the length of the cyclic prefix of the OFDM symbol being determined from the length of the channel impulse response and reflections of the RF network.

**7.** The OFDM data transmission system of any preceding claim, wherein the OFDM transmitter (20) comprises at least one Digital-to-Analog Converter (206) to convert the digital OFDM signal S to an analog OFDM signal *S(t)* at baseband, and a vector modulator (207) to up-convert said analog OFDM signal from baseband to an RF signal which is transmitted towards the nodes.

**8.** The OFDM data transmission system of any preceding claim, wherein each OFDM receiver (216) comprises at least one narrow filter (2164) for receiving said subset of carriers with a low sample rate in accordance with the bandwidth of said narrow filter.

**9.** The OFDM data transmission system of any preceding claim, wherein each OFDM receiver (216) comprises at least one tunable Local Oscillator (2162) for centering the OFDM receiver at the frequency of said subset of carriers.

**10.** The OFDM data transmission system of claim 9, wherein it comprises a clock signal common to said nodes, said Local Oscillator (2162) being locked to said clock signal to maintain synchronisation and to tune each carrier that transmits the desired data to a defined position within the bandwidth of the narrow filter (IF).

**11.** The OFDM data transmission system of any preceding claim 8 to 10, wherein each OFDM receiver comprises at least one Analog-To-Digital Converter (2164) to sample the filtered signal.

**12.** The OFDM data transmission system of any preceding claim, wherein each data packet further comprises a preamble preceding the OFMD symbols comprising symbols for phase correction, the OFDM receiver (216) being configured to demodulate the received symbols of the preamble, and comparing the demodulated symbols with known symbols of the transmitted preamble.

**13.** The OFDM data transmission system of claim 12, wherein each OFDM receiver (216) is configured to determine the phase rotation needed for phase correction from said comparison and determine the constellations point of the set of carriers assigned to the OFDM receiver by performing a Fast Fourier Transform operation, using said determined phase rotation.

**14.** The OFDM data transmission system according to any preceding claims, wherein said distributed system is a RF sensing system and each node is formed by a RF front-end module (21) comprising a number of Transmit/Receive channels and mounted behind an antenna face, the Transmit/Receive channels being connected to the radiators (23) at one end, and at the other end to a Radio Frequency combiner (22) with one common input/output port and as many individual input/output ports as RF front-end modules (21), the common port of the RF combiner (22) being connected to a circulator (24) for providing two signal paths for radar transmission and reception.

**15.** The OFDM data transmission system of claim 14, wherein said distributed system is a Radio-Frequency sensing system.

**16.** The OFDM data transmission system of claim 15, wherein said Radio-Frequency sensing system is a phased-array radar.

**17.** The OFDM data transmission system of claim 16, wherein it further comprises a Radar Signal Generator block (260) comprising a Radar Signal Generator (26) for transmitting an RF signal to the common port of the RF combiner (22), the OFDM transmitter (20) being included in said Radar Signal Generator block (260).

**18.** A method of transmitting OFDM data to a set of distributed nodes (21) connected to a network for data exchange, wherein it comprises:

- generating an OFDM signal for data that is to be provided to said nodes, said OFDM signal comprising a number of carriers for transmitting data packets comprising OFDM symbols towards the nodes, and
- in each node (21), receiving a different subset of said carriers corresponding to a given frequency, and being centered at the frequency of said subset of carriers.

**FIGURE 1A**

**FIGURE 1B**

**10**

RF to/from
4 → 1
combiner

T/R switch

Control bits

Phase shifter θ  **101**

Driver  **102**

HPA  **103**

50Ω

RF to/from
Radiator

VGA  **107**

Phase shifter θ  **106**

LNA  **105**

LIM  **104**

Control bits

Control bits

Control bits

**FIGURE 1C**

**200**

DC power supply  **25**

**260**

**23**

Clock/sync  **21**

1
4

RF front-end module  1

5
8

RF front-end module  2

1021
1024

RF front-end module  256

RF combiner

+
+
+

RF

Radar Signal Generator  **26**

OFDM Tx  **20**

Clock/sync

d1 ..d256

**24**

**22**

Beam Steering Computer  **27**

Radar Receiver  **28**

**FIGURE 2**

**FIGURE 3**

20

Constellation mapping

Re{S(t)}

Data for K front-end modules | Spectrum Shaping & Zero padding | IFFT | Add Cyclic Prefix

Re{**S**} DAC

$f_{LO} = f_c$

90°

Im{**S**} DAC

Im{S(t)}

s(t)

201    202        203        204    205        206            207

**FIGURE 4**

$$f_{LO} = f_c + m\Delta f \pm f_{IF}$$

FIGURE 5

clock/sync →

```
┌─────────────────────────┐
│   SYNCHRONIZATION        │
│                    602   │
└─────────────────────────┘
```

Rx OFDM →

```
┌─────────────────────────┐
│   Read message     603   │
└─────────────────────────┘
             │
             ▼
┌─────────────────────────┐
│  Demodulate message      │
│  preamble          604   │
└─────────────────────────┘
             │
             ▼
┌─────────────────────────┐
│  Compute phase rotation  │  ← Known
│                    605   │    data
└─────────────────────────┘
             │
             ▼
┌─────────────────────────┐
│  Demodulate remaining    │
│  symbols           606   │
└─────────────────────────┘
             │
             ▼
┌─────────────────────────┐
│  Retrieve binary data 607│  → Control
└─────────────────────────┘    Data
             │
             ▼
        Last message?
```

No

Yes

Wait

**FIGURE 6**

Europäisches
Patentamt

European
Patent Office

Office européen
des brevets

# EUROPEAN SEARCH REPORT

Application Number

EP 13 18 7413

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 282 683 B1 (GEILE MICHAEL J [US] ET AL) 28 August 2001 (2001-08-28)<br>* columns 19,30 *<br>* columns 39, 43 *<br>* columns 45, 47 *<br>* figure 1 * | 1-18 | INV.<br>H04L5/00<br>H04B10/272<br>H04L5/02<br>H04L27/26 |
| X | OLSHANSKY R: "SUBCARRIER MULTIPLEXED BROAD-BAND SERVICE NETWORK: A FLEXIBLE PLATFORM FOR BROAD-BAND SUBSCRIBER SERVICES",<br>JOURNAL OF LIGHTWAVE TECHNOLOGY, IEEE SERVICE CENTER, NEW YORK, NY, US,<br>vol. 11, no. 1,<br>1 January 1993 (1993-01-01), pages 60-68,<br>XP000377986,<br>ISSN: 0733-8724, DOI: 10.1109/50.210572<br>* figure 1 *<br>* page 62, section B "Broad-Band Equipment in the Central Office", l. 1-5 *<br>* page 63 * | 1-18 | |

TECHNICAL FIELDS
SEARCHED      (IPC)

H04L
H04B

The present search report has been drawn up for all claims

| Place of search | Date of completion of the search | Examiner |
|---|---|---|
| Berlin | 6 March 2014 | Feng, Mei |

EPO FORM 1503 03.82 (P04C01)

**ANNEX TO THE EUROPEAN SEARCH REPORT
ON EUROPEAN PATENT APPLICATION NO.**

EP 13 18 7413

This annex lists the patent family members relating to the patent documents cited in the above-mentioned European search report.
The members are as contained in the European Patent Office EDP file on
The European Patent Office is in no way liable for these particulars which are merely given for the purpose of information.

06-03-2014

| Patent document cited in search report | Publication date | Patent family member(s) | Publication date |
|---|---|---|---|
| US 6282683 B1 | 28-08-2001 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- A Fully Integrated 3-band OFDM UWB Transceiver in 0.25μm SiGe BiCMOS. **J. BERGERVOET ; H. KUNDUR ; D.M.W. LEENAERTS ; R.C.H VAN DE BEEK ; R. ROOVERS ; G. VAN DER WEIDE ; H. WAITE ; S. AGGARWAL.** Radio Frequency Integrated Circuits (RFIC) Symposium. IEEE, 11 June 2006

- **MORELLI, M. et al.** Synchronization Techniques for Orthogonal Division Multiple Access (OFDMA): A tutorial review. *Proceedings of the IEEE,* 2007, vol. 95 (7), 1394-1427